# EUROPEAN PATENT APPLICATION

(11) **EP 1 460 670 A1**
(43) Date of publication of application: **22.09.2004**
(21) Application number: 02793407.4
(22) Date of filing: 26.12.2002
(51) Int. Cl.: H01J 11/02, H01J 9/02

(54) **COMPOSITION FOR DIELECTRIC MATERIAL FOR USE IN PLASMA DISPLAY PANEL, LAMINATE FOR DIELECTRIC MATERIAL, METHOD FOR FORMING DIELECTRIC MATERIAL**

(30) Priority: 27.12.2001 JP 2001397202
(71) Applicant: TOKYO OHKA KOGYO CO., LTD., Kawasaki-shi Kanagawa 211-0012 (JP)
(72) Inventor: OSHIO, Kiminori, TOKYO OHKA KOGYO CO., LTD., Kawasaki-shi, Kanagawa 211-0012 (JP); INOUE, Tomoyuki, TOKYO OHKA KOGYO CO., LTD., Kawasaki-shi, Kanagawa 211-0012 (JP); OBIYA, Hiroyuki, TOKYO OHKA KOGYO CO., LTD., Kawasaki-shi, Kanagawa 211-0012 (JP)
(74) Representative: HOFFMANN - EITLE
(86) International application number: PCT/JP2002/013610
(87) International publication number: WO 2003/056600

(57) **Abstract**

In a laminate for a dielectric of a plasma display panel laminating two layers, a first layer contains inorganic powder, a binder resin, and a light absorbent which absorbs light having a predetermined wavelength, the second layer contains inorganic powder, a binder resin, a photopolymerizable monomer and a photopolymerization initiator. And the invention provides a composition for a dielectric to form the first layer and the second layer. Further, the invention provides a method for forming a dielectric that the first layer and the second layer are provided on a glass substrate, and the second layer is developed after light irradiating and is carried out patterning, subsequently, the first layer and the second layer are collectively fired.

## Description

### Technical Field

The present invention relates to a composition for a dielectric for forming the dielectric of a plasma display panel, a laminate for the dielectric, and a method of forming the dielectric.

### Background Art

A plasma display panel (hereinafter abbreviated as PDP) is configured by forming a dielectric made up of a phosphor, electrodes and inorganic materials in numbers of microspaces formed by two glass substrates and barrier ribs provided between the substrates and injecting a discharge gas thereto. In PDP, each microspace is one pixel, when a voltage is applied to electrodes, a discharge is started through the dielectrics, thereby a discharge gas is excited and phosphors are illuminated by ultraviolet ray emitted when the discharge gas returns to a ground state. Such PDPs are more suitable for large size displays compared to conventional liquid crystal display devices and CRT displays, and have been put into practical use.

As a specific structure of microspaces, conventionally a stripe type where numbers of parallel slots are aligned has been frequently employed. In this stripe type, the phosphor is formed on three faces which are a bottom and two side faces facing thereto in the slot, and the discharge gas in introduced from both ends of the slot. However, luminescence luminance has been limited in this structure.

Thus, recently, a cell type where barriers are provided in each slot in the stripe type has been developed. In this cell type, the phosphor is applied on total five faces which are a bottom face and four side faces surrounding the bottom face in each cell and a surface area of the phosphor can be increased, Therefore the luminance can be enhanced.

However, in the case of the cell type, there has been problematic in that it is difficult to assure an introduction path of the discharge gas because all four sides are covered with barrier ribs. Thus, a technology where columns are installed on the barrier ribs which surround each cell and the gas is introduced through slits formed by the columns has been developed. However, in this case, a fabrication method is a method which requires many steps, where the respective barrier ribs in a vertical and horizontal directions, which are formed to be orthogonal each other are formed via a patterning step utilizing photoresist and sandblast, and thus there has been problem that working efficiency is poor.

As described above, in PDP, particularly the cell type PDP, there has been problem that it is difficult to easily assure the path for the introduction of discharge gas.

An object of the invention is to form an introduction path of the discharge gas relatively simply compared to conventional ones and to enhance the working efficiency for the steps of fabricating a plasma display panel.

### Disclosure of Invention

In order to solve the above problems, in accordance with a first aspect of the invention, a composition for a dielectric of a plasma display panel laminating two layers comprises: a first layer composition containing inorganic powder, a binder resin, and a light absorbent which absorbs light having a predetermined wavelength; a second layer composition containing inorganic powder, a binder resin, a photopolymerizable monomer and a photopolymerization initiator.

According to the composition for a dielectric of a plasma display of the invention, the composition comprises the first layer and the second layer which contain organic powder and the binder resin, the composition for a dielectric for forming the first layer contains additionally a light absorbent which absorbs light having a predetermined wavelength, and the composition for a dielectric for forming the second layer contains additionally a photopolymerizable monomer and a photopolymerization initiator.

Therefore, when the light having the predetermined wavelength is selectively irradiated onto second layer through a photo mask and the like in a state where the first layer and the second layer are overlaid to make a laminate for the dielectric, the light which passes through the second layer and attains to the first layer is absorbed by the light absorbent. This can prevent halation where the light which attains to the first layer is scattered by inorganic powder and the like in the first layer and subsequently reenters the second layer from random directions, and form the desired latent image pattern according to shape of mask by giving a development treatment to the second layer, after that, by eliminating all organic contents from the first layer and the second layer by firing, a dielectric with which the first layer and the second layer are integrated is formed, and a concavoconvex pattern derived from the second layer is formed on the surface thereof.

When fabricating PDP, paths through which the discharge gas is introduced to each cell can be assured by fitting concave parts to a barrier rib and by fitting convex parts to each cell so as to cover respectively. This way, the gas introduction paths can be simply formed by collectively firing the first layers and the second layers to form the dielectric, and it is possible to enhance the working efficiency of the fabrication step of plasma display panels and shorten a tact time per panel.

Here, the light absorbent is one which absorbs the light with wavelength which can be exposed to the second layer, and materials thereof may be organic or inorganic matters unless they impair properties of the dielectric, and multiple types of light absorbents may be used in mixture.

It is preferred that the light absorbent is 0.01 parts by weight to 30 parts by weight based on total 100 parts by weight of the inorganic powder, the binder resin and the light absorbent in the composition for the dielectric of the first layer of the plasma display of the invention. This demonstrates sufficient light absorption effect.

When the rate of the light absorption is less than 0.01 parts by weight in this composition for dielectric, sufficient light absorption effect can not be exerted and a pattern may be disordered by halation when patterning the second layer. Thus if a pattern is disordered, paths to introduce a discharge gas can not be fully assured or cells connect and discharge which is not intended occurs and a confusion of discharge voltage may be occur and it is not preferable. Further, when containing more than 30 parts by weight, a sensitivity of the bottom of the second layer falls, and when patterning the second layer, the forming for pattering is impossible or the good shaped pattern may not be obtained and it is not preferable.

In order to solve the above problems, in accordance with a second aspect of the invention,
a laminate for a dielectric of a plasma display panel laminating two layers comprises: a first layer containing inorganic powder, a binder resin, and a light absorbent which absorbs light having a predetermined wavelength; a second layer containing inorganic powder, a binder resin, a photopolymerizable monomer and a photopolymerization initiator.

According to the laminate for the dielectric of the plasma display of the invention, as with the first aspect, it is possible to easily form the gas introduction paths, enhance the working efficiency in the fabrication steps of plasma display panels and shorten the tact time per panel.

Further, in the first aspect and the second aspect, the composition for dielectric and the laminate for dielectric may contain other films and thin plate, for example, the first layer and the second layer may be laminated so as to touch a support film and a protective film. In addition, it may be a state where it is laminated on the glass substrate which composes PDP.

Further, in accordance with a third aspect of the invention, a method for forming a dielectric of a plasma display panel laminating two layers of the invention comprises: providing a first layer containing inorganic powder, a binder resin and a light absorbent which absorbs light having a predetermined wavelength on a glass substrate and a second layer containing inorganic powder, a binder resin, a photopolymerizable monomer, and a photopolymerization initiator on the first layer; then forming a pattern having a predetermined shape by developing after selectively irradiating the light having the predetermined wavelength to the second layer; and collectively firing the first layer and the second layer.

According to the method for forming a dielectric of the plasma display of the invention, it is possible to enhance the working efficiency of the fabrication steps of plasma display panels and shorten the tact time per panel as the first aspect and the second aspect.

Further, a concavoconvex pattern derived from the second layer is formed in the dielectric. When fabricating the PDP, Dielectrics derived from the second layer are fitted so as to cover each cell. Then, by fitting concavo parts to a barrier rib, convex parts to each cell so as to correspond respectively, it is possible to assure paths to introduce a discharge gas to each cell.

### Best Mode for Carrying Out of the Invention

Hereinafter, the invention is illustrated in detail.

The first layer and the second layer which configure the laminate for the dielectric according to the invention use inorganic powder and a binder resin as essential component. Further, the first layer contains a light absorbent which absorbs the light having a predetermined wave length, the second layer contains a photopolymerizable monomer and a photopolymerization initiator.

The first layer and the second layer, as described above, are configured by the inorganic powder, the binder resin and the light absorbent, the photopolymerizable monomer and the photopolymerization initiator. Typically it is possible to form the layers by mixing these with organic solvents and the like, to prepare liquid or paste compositions for the dielectric, and directly applying these compositions on a glass substrate which composes PDP to form laminating films, or making films from the compositions and laminating the films on the glass substrate.

The inorganic powder contained in the first layer and the second layer is preferably one which is vitrescible by firing, and for example, includes PbO-SiO₂, PbO-B₂O₃-SiO₂, ZnO-SiO₂, ZnO-B₂O₃-SiO₂, BiO-SiO₂, BiO-B₂O₃-SiO₂, PbO-B₂O₃-SiO₂-Al₂O₃, and PbO-ZnO-B₂O₃-SiO₂ systems, and the like.

As the binder resins contained in the first layer and the second layer, it is possible to use those obtained by polymerizing or copolymerizing monomers included below. Further, these monomers can be mixed as photopolymerizable monomers in the first layer and the second layer.

As such monomers, for example, it is possible to suitably use (meth)acrylate ester, ethylenic unsaturated carboxylic acid and the other copolymerizable monomers, and include benzyl acrylate, benzyl methacrylate, cyclohexyl acrylate, cyclohexyl methacrylate, phenoxyethyl acrylate, phenoxyethyl methacrylate, phenoxypolyethyleneglycol acrylate, phenoxypolyethyleneglycol methacrylate, styrene, nonylphenoxypolyethyleneglycol monoacrylate, nonylphenoxypolyethyleneglycol monomethacrylate, nonylphenoxypolypropylene monoacrylate, nonylphenoxypolypropylene monomethacrylate, 2-hydroxy-3-phenoxypropyl acrylate, 2-acryloyloxyethyl phthalate, 2-acryloyloxyethyl-2-hydroxyethyl phthalate, 2-methacryloyloxyethyl-2-hydroxypropyl phthalate, methyl acrylate, ethyl acrylate, methyl methacrylate, ethyl methacrylate, n-propyl acrylate, n-propyl methacrylate, i-propyl acrylate, i-propyl methacrylate, n-butyl acrylate, n-butyl methacrylate, i-butyl acrylate, i-butyl methacrylate, sec-butyl acrylate, sec-butyl methacrylate, tert-butyl acrylate, tert-butyl methacrylate, 2-hydroxyethyl acrylate, 2-hydroxyethyl methacrylate, 2-hydroxypropyl acrylate, 2-hydroxypropyl methacrylate, 3-hydroxypropyl acrylate, 3-hydroxypropyl methacrylate, 2-hydroxybutyl acrylate, 2-hydroxybutyl methacrylate, 3-hydroxybutyl acrylate, 3-hydroxybutyl methacrylate, 4-hydroxybutyl acrylate, 4-hydroxybutyl methacrylate, 3-ethylhexyl acrylate, ethyleneglycol monoacrylate, ethyleneglycol monomethacrylate, glycerol acrylate, glycerol methacrylate, dipentaerythritol monoacrylate, dipentaerythritol monomethacrylate, dimethylaminoethyl acrylate, dimethylaminoethyl methacrylate, tetrahydrofurfuryl acrylate, tetrahydrofurfuryl methacrylate, acrylic acid, methacrylic acid, crotonic acid, cinnamic acid, maleic acid, maleic anhydride, fumaric acid, itaconic acid, itaconic anhydride, citraconic acid, citraconic anhydride, and the like. In these, acrylic acid and methacrylic acid are suitably used.

As the other copolymerizable monomers, it is possible to include, for example, fumarate esters, maleate esters, crotonate esters and itaconate esters where the aforementioned example compounds of (meth)acrylate esters are changed to fumarate, maleate, crotonate and itaconate compounds, respectively, o-methylstyrene, o-vinyltoluene, m-vinyltoluene, p-vinyltoluene, o-chlorostyrene, m-chlorostyrene, p-chlorostyrene, o-methoxystyrene, m-methoxystyrene, p-methoxystyrene, vinyl acetate, vinyl butyrate, vinyl propionate, acrylamide, methacrylamide, acrylonitrile, methacrylonitrile, isoprene, chloroprene, 3-butadiene, and the like.

Photopolymerizable monomers can include the monomers described above, however the monomers which has two or more polymerizable ethyleny unsaturated bond (hereinafter referred to as polyfunctional monomer) is preferable. As polyfunctiional monomer, it is possible to include, for example, diacrylate of alkyleneglycol or dimethacrylates such as ethyleneglycol, propyleneglycol and the like, diacrylate of polyalkyleneglycol or dimethacrylates such as polyethyleneglycol, polypropyleneglycol, polyacrylate of polyvalent alcohol or polymethacrylates and denatured dicarboxylic acid of those such as glycerin, trimethylolpropane, pentaerythritol, dipentaerythritol.

Among them, specifically, it is possible to include ethyleneglycol diacrylate, ethyleneglycol dimethacrylate, triethyleneglycol diacrylate, triethyleneglycol dimethacrylate, tetraethyleneglycol diacrylate, tetraethyleneglycol dimethacrylate, propyleneglycol diacrylate, propyleneglycol dimethacrylate, polypropyleneglycol diacrylate, polypropyleneglycol dimethacrylate, trimethylolpropane triacrylate, trimethylolpropane trimethacrylate, tetramethylolpropane tetraacrylate, tetramethylolpropane tetramethacrylate, pentaerythritol triacrylate, pentaerythritol trimethacrylate, pentaerythritol tetraacrylate, pentaerythritol tetramethacrylate, dipentaerythritol pentamethacrylate, dipentaerythritol hexaacrylate, dipentaerythritol hexamethacrylate, and the like.

As polymerization catalysts at the polymerization to use the above monomer as the binder resin, it is possible to use common radical polymerization initiators, and include, for example, azo compounds such as 2-2'-azobisisobutyronitrile, 2,2'-azobis-(2,4-dimethylvaleronitrile and 2,2'-azobis-(4-methoxy-2-dimethylvaleronitrile), organic peroxides such as benzoyl peroxide, lauroyl peroxide, tert-butyl peroxypivalate and 1,1'-bis-(tert-butylperoxy)cyclohexane, and hydrogen peroxide, and the like. When the peroxide is used as the radical polymerization initiator, it may be made into a redox type initiator by combining a reducing agent.

In addition to the polymers and copolymers of the above monomers, as the binder resins, it is possible to use cellulose derivatives such as cellulose, hydroxymethylcellulose, hydroxyethylcellulose, hydroxypropylcellulose, carboxymethylcellulose, carboxyethylcellulose and carboxyethylmethylcellulose, and further copolymers of these cellulose derivatives with ethylenic unsaturated carboxylic acid and (meth)acrylate compounds.

Additionally, the binder resins include polyvinyl alcohols such as polybutyral resin which is a reaction product of polyvinyl alcohol with butylaldehyde, polyesters such as δ-valerolactone, ε-caprolactone, β-propiolactone, α-methyl-β-propiolactone, β-methyl-β-propiolactone, α-methyl-β-propiolactone, β-methyl-β-propiolactone, α,α-dimethyl-β-propiolactone and β,β-dimethyl-β-propiolactone where lactones are polymerized with ring-opening, polyesters obtained by a condensation reaction of alkylene glycol alone such as ethyleneglycol, propyleneglycol, diethyleneglycol, triethyleneglycol, dipropyleneglycol and neopentylglycol or two or more of diols with dicarboxylic acid such as maleic acid, fumaric acid, glutaric acid and adipic acid, polyethers such as polyethyleneglycol, polypropyleneglycol, polytetramethyleneglycol and polypentamethyleneglycol, polycarbonates which are reaction products of diols such as bisphenol A, hydroquinone and dihydroxycyclohexane with carbonyl compounds such as diphenylcarbonate, phosgene and succinic acid anhydride.

The above binder resins can be used alone or in mixture with two or more.

Here, when the compositions for the dielectric are prepared into liquid or paste, an organic solvent can be used as a solvent. The organic solvents include, for example, alcohols such as methanol, ethanol, ethyleneglycol, diethyleneglycol, propyleneglycol and 3-methoxy-3-methylbutanol, cyclic ethers such as tetrahydrofuran and dioxane, alkyl ethers of polyvalent alcohol such as ethyleneglycol monomethylether, ethyleneglycol monoethylether, ethyleneglycol dimethylether, ethyleneglycol diethylether, diethyleneglycol monomethylether, diethyleneglycol monoethylether, diethyleneglycol dimethylether, diethyleneglycol diethylether, diethyleneglycol ethylmethylether, propyleneglycol monomethylether and propyleneglycol monoethylether, alkoxyalkyl acetates such as 2-methoxybutyl acetate, 3-methoxybutyl acetate, 4-methoxybutyl acetate, 2-methyl-3-methoxybutyl acetate, 3-methyl-3-methoxybutyl acetate, 3-ethyl-3-methoxybutyl acetate, 2-ethoxybutyl acetate and 4-ethoxybutyl acetate, alkylether acetates of polyvalent alcohol such as ethyleneglycol ethylether acetate, diethyleneglycol ethylether acetate, propyleneglycol ethylether acetate and propyleneglycol monomethylether acetate, aromatic hydrocarbons such as toluene and xylene, ketones such as acetone, methylethylketone, methylisobutylketone, cyclohexane, 4-hydroxy-4-methyl-2-pentanone and diacetone alcohol, and esters such as ethyl acetate, butyl acetate, ethyl 2-hydroxypropionate, methyl 2-hydroxy-2-methylpropionate, ethyl 2-hydroxy-2-methylpropionate, ethyl ethoxyacetate ethyl hydroxyacetate, methyl 2-hydroxy-3-methylbutanoate, methyl 3-methoxypropionate, ethyl 3-methoxypropionate, ethyl 3-ethoxypropionate and methyl 3-ethoxypropionate. In these, cyclic ethers, alkylethers of polyvalent alcohol, alkylether acetates of polyvalent alcohol, ketones, esters and the like are preferable.

These solvents are used to dissolve or uniformly disperse the composition for the dielectric. If the composition is dissolved or uniformly dispersed without solvents, no solvent may be used.

The photopolymerization initiator contained as the essential component in the second layer includes 1-hydroxycyclohexyl phenylketone, 2,2-dimethoxy-1,2-diphenylethane-1-one, 2-methyl-1-[4-(methylthio)phenyl]-2-morpholinopropane-1-one, 2-benzyl-2-dimethylamino-1-(4-morpholinophenyl)-butane-1-one, 2-hydroxy-2-methyl-1-phenylpropane-1-one, 2,4,6-trimethylbenzoyldiphenylphosphine oxide, 1-[4-(2-hydroxyethoxy)phenyl]-2-hydoroxy-2-methyl-1-peopane-1-one, 2,4-diethylthioxanthone, 2-chlorothioxanthone, 2,4-dimethylthioxanthone, 3,3-dimethyl-4-methoxybenzophenone, benzophenone, 1-chloro-4-propoxythioxanthone, 1-(4-isopropylphenyl)-2-hydroxy-2-methylpropane-1-one, 1-(4-dodecylphenyl)-2-hydroxy-2-methylpropane-1-one, 4-benzoyl-4'-methyldimethyl sulfide, 4-dimethylaminobenzoic acid, methyl 4-dimethylaminobenzoate, ethyl 4-dimethylaminobenzoate, butyl 4-dimethylaminobenzoate, 4-dimethylaminobenzoate-2-ethylhexyl, 4-dimethylaminobenzoate-2-isoamyl, 2,2-diethoxyacetophenone, 2,2-dimethoxy-2-phenylacetophenone, benzyldimethylketal, benzyl-β-methoxyethylacetal, 1-phenyl-1,2-propanedione-2-(o-ethoxycarbonyl)oxime, methyl o-benzoylbenzoate, bis(4-dimethylaminophenyl)ketone, 4,4'-bisdiethylaminobenzophenone, 4,4'-dichlorobenzophenone, benzyl, benzoin, benzoin methylether, benzoin ethylether, benzoin isopropylether, benzoin n-butylether, benzoin isobutylether, p-dimethylaminoacetophenone, p-tert-butyltrichloroacetophenone, p-tert-butyldichloroacetophenone, thioxanthone, 2-methylthioxanthone, 2-isopropylthioxanthone, dibenzosuberone, α,α-dichloro-4-phenoxyacetophenone, pentyl-4-dimethylaminobenzoate, 9-phenylacridine, 1,7-bis-(9-acridinyl)heptane, 1,5-bis-(9-acridinyl)pentane, 1,3-bis-(9-acridinyl)propane, and the like. These photopolymerization initiators may be used alone or in combination with two or more.

The second layer contains the photopolymerizable monomer and the photopolymerization initiator as essential components. Therefore, by giving patterning only to the second layer after forming the second layer on the first layer, finally the dielectric having a concavoconvex pattern derived from a pattern on the second layer can be formed. Subsequently, as described below, "slits" are produced at the upper part of each cell by putting a convex part on a barrier rib part, and thus a discharge gas can be introduced.

When the photopolymerizable monomer and the photopolymerization initiator are additionally contained also in the first layer, nearly entire faces of the first layer could be exposed before the exposure and development of the second layer. In addition, the patterning may be also given to the first layer. For example, the predetermined pattern may be formed at marginal parts of the first layer in conformity with an outer shape of the glass substrate which composes the PDP.

Further, the first layer contains a light absorbent capable of absorbing light having a wavelength which is exposed to the second layer, i.e., photoactivates a photopolymerization initiator contained in the second layer as essential component.

As such a light absorbent, those which absorb the light with a wavelength of 300 to 450 nm are suitably used, and for example, azo type dyes, aminoketone type dyes, xanthene type dyes, quinoline dyes, benzophenone type dyes, triazine type dyes, benzotriazole type dyes, and anthraquinone type dyes are included.

It is preferred that the light absorbent is mixed at 0.01 to 30 parts by weight based on total 100 parts by weight of the inorganic powder, the binder resin and the light absorbent in the composition for forming the first layer.

When it is less than 0.01 parts by weight, sufficient light absorption effect can not be exerted. When it is more than 30 parts by weight, the second layer around an interface is not sufficiently exposed due to excess absorption of the light. Thus, a film is sometimes peeled off and the pattern can not be sometimes formed.

As described above, when the first layer contains the light absorbent capable of absorbing the light with the wavelength which photoactivates the photopolymerization initiator contained in the second layer, it is possible to prevent the light which enters the first layer from being scattered by inorganic powder and the like inside the first layer when the second layer is patterned into the predetermined shape by exposing in a state where the first layer and the second layer are laminated.

Thus, if the light absorbent is not contained, the light is scattered by particles of the inorganic powder and the like in the first layer. Therefore, the second layer is exposed by the light which enters in undefined directions from the first layer, and consequently an accurate pattern formation according to the mask becomes impossible. To prevent it, the first layer is fired to make a transparent glass state, and subsequently the second layer is formed, exposed and again fired, i.e., the firing must be performed twice.

However, in the invention, the first layer contains the light absorbent, and thus, the firing can be performed at a time and the desired pattern can be formed.

In the invention, to obtain a laminate for the dielectric, a liquid or paste composition for the dielectric for the first layer (hereinafter, referred to as a first composition) where the above solvent, binder resin, inorganic powder and light absorbent, and if necessary, photopolymerizable monomer and photopolymerization initiator are mixed is prepared. For the second layer, a liquid or paste composition for the dielectric (hereinafter, referred to as a second composition) where the above solvent, binder resin, inorganic powder, photopolymerizable monomer and photopolymerization initiator are mixed is prepared.

Additionally, various additives such as a dispersant, tackifier, plasticizer, surface tension adjuster, stabilizer and defoaming agent may be added as optional ingredients to the first composition and the second composition.

In the first composition and the second composition, a ratio of the inorganic powder could be from 100 to 1000 parts by weight based on 100 parts by weight of all organic components (including the organic solvent, binder resin, photopolymerizable monomer, photopolymerization initiator and the like).

The inorganic powder, binder resins and the other additives included in the first composition and the second composition, respectively may be the same or different materials. Even when they are the same material, the ratios thereof may be different.

The laminate for the dielectric according to the invention is fabricated by, for example, the methods (1) to (3) described below.
(1) A laminate is obtained by applying the first composition on the glass substrate which composes the PDP, eliminating the solvent to form a first layer, subsequently, applying the second composition on the first layer, eliminating the solvent to form a second layer.
(2) The solvent of the first composition is precedently eliminated to make a film, the second composition is applied onto the surface thereof, resulting in forming a double laminate. Subsequently, it is anchored to the glass substrate which composes the PDP.
(3) The solvents are eliminated from the first composition and the second composition, respectively, which are made into films and the films are laminated. Subsequently, it is anchored to the glass substrate which composes the PDP. Or those made into films are sequentially laminated onto the glass substrate.

That is, the laminate for the dielectric of the invention may be one formed by directly laminating on the glass substrate or one precedently formed into a laminated state before being provided on the glass substrate.

In addition, it is preferred that the thickness of the first layer is from 5 to 40 µm and the thickness of the second layer is from 5 to 50 µm, which are derived from the laminate for the dielectric after the firing.

Before providing on the glass substrate, when the first layer and the second layer are separately made into films, and when made into a laminated film which overlapped two layers, it is preferred that the film is formed on a support film or covered with a protective film for convenience of easiness of film fabrication, handling, or convenience at storage.

Resins usable as the support film and the protective film can include polyethylene terephthalate, polyester, polyethylene, polypropylene, polystyrene, polyimide, polyvinyl alcohol, polyvinyl chloride, fluorine-containing resins such as polyfluoroethylene, nylon, cellulose, and the like. For improving mold release property, mold release treatment such as Si treatment may be performed. A thickness of the support film is, for example, from 15 to 100 µm, and a thickness of the protective film is, for example, from 15 to 60 µm.

As described above, it has been described that the photopolymerizable monomer and the photopolymerization initiator may be mixed in the first layer if necessary. When the photopolymerization is performed to cure before and after providing on the glass substrate after making into a film, adhesive force is reduced and the support film and the protective film are easily peeled off. Furthermore, a shrinking rate at the firing can be uniformized by containing the same photopolymerizable monomer and the photopolymerization initiator as those in the second layer.

After providing the laminate for the dielectric on the glass substrate, the second layer is exposed by the light having a predetermined wavelength through a mask with a predetermined shape. Subsequently, a predetermined pattern is formed by eliminating unexposed parts by a developer made up of a solvent, or the like. Subsequently, all the organic components are fired out, the inorganic components are vitrificated and the dielectric is formed by collectively firing the first layer and the second layer at the temperature of 450°C or more. A concavoconvex pattern derived from the pattern at the second layer is formed on the surface of this dielectric.

As a wavelength of a light source by which the pattern of the second layer is formed, it is possible to use the light with a wavelength of 300 nm to 450 nm, and specifically g ray (436 nm), h ray (405 nm) and i ray (365 nm) can be preferably used.

And, when the PDP is fabricated, the glass substrate with the dielectric having the concavoconvex pattern (concavoconvex dielectric) is attached to the above cell-type substrate where phosphors and the like are formed inside the barrier ribs. A slit is produced at the side of the dielectric opposite to the phosphor in each cell by aligning a convex part of the dielectric to the barrier rib and aligning a concave part onto the cell, and thus the discharge gas can be introduced into the cell.

The invention is particularly suitably used for the cell-type PDP, but of course may be used for the stripe type PDP.

### EXAMPLE

Next, the present invention is illustrated in more detail based on examples, but the invention is not limited thereto.

### [ EXAMPLE1]

### 1. FABRICATION OF FILM FOR DIELECTRIC FOR FIRST LAYER

### (1) PREPARATION OF FIRST COMPOSITION FOR FORMING FIRST LAYER

An organic component was prepared by mixing 99.5 parts by weight of isobutyl methacrylate/hydroxyethyl acrylate =(80/20, weight ratio) copolymer (Mw=20,000) as an acryl resin, 0.5 parts by weight of an azo dye(trade name: Dye SS supplied from Daito Chemix Corporation) as an ultraviolet ray absorbent, and 100 parts by weight of 3-methoxy-3-methylbutanol as a solvent for 3 hours in a mixer.

A glass paste composition as the first composition was prepared by kneading 20 parts by weight of the resultant organic component(solid content:50%) and 80 parts by weight of glass frit(PbO-SiO₂ system).

### (2) FABRICATION OF FILM

The glass paste composition obtained in (1) was applied on a support film made up of polyethylene terephthalate using a lip coater, and the solvent was completely eliminated by drying a coated film at 100°C for 6 min to form a glass paste film with a thickness of 60 µm on the support film.

Next, polyethylene with a thickness of 25 µm as a protective film was attached on the resultant glass paste film to fabricate a film for the dielectric.

### 2. PRODUCTION OF WATER DEVELOPMENT-TYPE PHOTOSENSITIVE FILM FOR SECOND LAYER

### (1) PREPARATION OF SECOND COMPOSITION FOR FORMING SECOND LAYER

An organic component was prepared by mixing 22 parts by weight of hydroxypropylcellulose as a water-soluble cellulose derivative, 14 parts by weight of styrene/hydroxyethyl methacrylate =(55/45, weight ratio) copolymer (Mw=40,000) as an acryl resin, 63 parts by weight of the 2-methacryloyloxyethyl-2-hydroxypropyl phthalate as a photopolymerizable monomer, 0.9 parts by weight of 2,2-dimethoxy-2-phenylacetophenone as a photopolymerization initiator, 0.1 parts by weight of the azo dye as an ultraviolet ray absorbent, and 100 parts by weight of 3-methoxy-3-methylbutanol as a solvent for 3 hours in a mixer.

In addition, the addition of the azo dye in the organic component is for preventing halation inside the second layer and forming a sharp pattern.

A water development-type photosensitive glass paste composition as the second composition was prepared by kneading 20 parts by weight of the resultant organic component (solid content: 50%) and 80 parts by weight of the glass frit.

### (2) PRODUCTION OF FILM

The resultant water development-type photosensitive glass paste composition was applied on a support film made up of polyethylene terephthalate using a lip coater, and the solvent was eliminated by drying a coated film at 100°C for 6 min to form a photosensitive glass paste film with a thickness of 40 µm on the support film.

Next, a polyethylene film with a thickness of 25 µm as a protective film was attached onto the photosensitive glass paste film to fabricate a water development-type photosensitive film.

### 3. FABRICATION OF LAMINATE FOR DIELECTRIC

### (1) LAMINATION OF FILM FOR DIELECTRIC

The film for dielectric was laminated on the glass which had been precedently heated at 80°C and with which bus electrodes were laminated (lamination) by a hot roll laminator at 105°C with peeling polyethylene film of film for dielectric obtained in 1-(2) of EXAMPLE1. An air pressure was 3 kg/cm², and a laminating speed was 1.0 m/min.

Subsequently, polyethylene terephthalate of the support film was peeled off.

### (2) LAMINATION OF WATER DEVELOPMENT-TYPE PHOTOSENSITIVE FILM

The film for dielectric was laminated on the glass which had been precedently heated at 80°C and was obtained in the above-described 3-(1) of EXAMPLE1 by a roll laminator at room temperature with peeling polyethylene film of water development-type photosensitive film obtained in 2-(2) of EXAMPLE1. An air pressure was 3 kg/cm², and a laminating speed was 1.0 m/min.

As described above, a laminate for dielectric of the invention configured from the first layer derived from film for dielectric and the second layer derived from water development-type photosensitive film was formed. In this step, surface of the laminate for dielectric(water development-type photosensitive film) is covered with the support film.

### 4. EVALUATION OF LAMINATE FOR DIELECTRIC AND FABRICATION OF DIELECTRIC

Ultra violet ray was exposed to the water development-type photosensitive film of laminate for dielectric on the glass substrate obtained in 3-(2) of EXAMPLE1 by an ultra high pressure mercury lamp at an irradiation quantity of 300 mJ/cm² through a test pattern mask with which a predetermined pattern was formed. Subsequently, polyethylene terephthalate of the support film was peeled off.

Subsequently, a spray development was performed by spraying water from nozzle for 30 seconds at a liquid temperature of 30°C at a spray pressure of 3 kg/cm², and a non-exposed part of the water development-type photosensitive film was eliminated, and consequently a pattern was formed.

A pattern shape of the resultant pattern were evaluated. Consequently, a remaining minimum line width in formed lines was 60 µm.

Next, the firing treatment where the temperature was raised at a rising speed of 10°C/min and retained at 580°C for 30 min was given. Consequently, the good dielectric pattern was obtained.

### [ EXAMPLE2]

### 1 FABRICATION OF FILM FOR DIELECTRIC FOR FIRST LAYER

### (1) PREPARATION OF FIRST COMPOSITION FOR FORMATION OF FIRST LAYER

An organic component was prepared by mixing 25 parts by weight of hydroxypropylcellulose as a cellulose derivative, 34 parts by weight of 2-methacryloyloxyethyl-2-hydroxypropyl phthalate (trade name: HO-MPP supplied from Kyoeisha Chemical Co., Ltd.) as a photopolymerizable monomer, 40.5 parts by weight of 2,2-dimethoxy-2-phenylacetophenone (trade name: IR-651 supplied from Ciba-Geigy Japan Ltd.) as a photopolymerization initiator, 0.5 parts by weight of an azo dye (trade name: Dye SS supplied from Daito Chemix Corporation) as an ultraviolet ray absorbent, and 100 parts by weight of 3-methoxy-3-methylbutanol as a solvent for 3 hours in a mixer.

A photosensitive glass paste as the first composition was prepared by kneading 20 parts by weight of the resultant organic component (solid content: about 50%) and 80 parts by weight of glass frit(for example, lead system such as PbO-SiO₂).

### (2) FABRICATION OF FILM

The photosensitive glass paste composition obtained in (1) was applied on a support film made up of polyethylene terephthalate using the lip coater, and the solvent was eliminated by drying a coated film at 100°C for 6 min to form a photosensitive glass paste film with a thickness of 60 µm on the support film.

Next, as a protective film, polyethylene film with a thickness of 25 µm was attached onto the resultant photosensitive glass paste to fabricate a film for dielectric.

### 2. PRODUCTION OF WATER DEVELOPMENT-TYPE PHOTOSENSITIVE FILM FOR SECOND LAYER

### (1) PREPARATION OF SECOND COMPOSITION FOR FORMATION OF SECOND LAYER

An organic component was prepared by mixing 22 parts by weight of hydroxypropylcellulose as a water-soluble cellulose derivative, 14 parts by weight of styrene/hydroxyethyl methacrylate (55/45, weight ratio) copolymer (Mw=40,000) as an acryl resin, 63 parts by weight of the 2-methacryloyloxyethyl-2-hydroxypropyl phthalate as a photopolymerizable monomer, 0.9 parts by weight of the 2,2-dimethoxy-2-phenylacetophenone as a photopolymerization initiator, 0.1 parts by weight of the azo dye as an ultraviolet ray absorbent, and 100 parts by weight of 3-methoxy-3-methylbutanol as a solvent for 3 hours in a mixer.

The addition of the azo dye in the organic component is for preventing halation inside the second layer and forming a sharp pattern.

A water development-type photosensitive glass paste composition as the second composition was prepared by kneading 20 parts by weight of the resultant organic component (solid content: about 50%) and 80 parts by weight of the glass frit.

### (2) PRODUCTION OF FILM

The photosensitive glass paste composition obtained in (1) was applied on a support film made up of polyethylene terephthalate using the lip coater, and the solvent was eliminated by drying a coated film at 100°C for 6 min to form a photosensitive glass paste film with a thickness of 40 µm on the support film.

Next, as a protective film, polyethylene film with a thickness of 25 µm was attached onto the photosensitive glass paste to fabricate a water development-type photosensitive film.

### 3. FABRICATION OF LAMINATE FOR DIELECTRIC

### (1) LAMINATION OF FILM FOR DIELECTRIC

The film for dielectric was laminated on the glass substrate which had been precedently heated at 80°C and with which bus electrodes were laminated (lamination) by a hot roll laminator at 105°C with peeling polyethylene film of film for dielectric obtained in 1-(2) of EXAMPLE2. An air pressure was 3 kg/cm², and a laminating speed was 1.0 m/min.

Ultra violet ray was exposed to the film layer for dielectric on the glass substrate by an ultra high pressure mercury lamp at an irradiation quantity of 100 mJ/cm². Consequently, 2-methacryloyloxyethyl-2-hydroxypropyl phthalate was polymerized using 2,2-dimethoxy-2-phenylacetophenone as a initiator. It becomes easy to peel off the support film because adhesiveness decreases due to hardening by polymerization.

Next, polyethylene terephthalate of the support film was peeled off.

### (2) LAMINATION OF WATER DEVELOPMENT-TYPE PHOTOSENSITIVE FILM

The film for dielectric was laminated on the glass substrate which had been precedently heated at 80°C obtained in the above-described 3-(1) of EXAMPLE2 by the roll laminator at room temperature with peeling polyethylene, film of the water development-type photosensitive film obtained in 2-(2) of EXAMPLE2. An air pressure was 3 kg/cm², and a laminating speed was 1.0 m/min.

As described above, a laminate for dielectric of the invention configured from the first layer derived from film for dielectric and the second layer derived from water development-type photosensitive film was formed. In this step, a surface of the laminate for dielectric (water development-type photosensitive film) is covered with the support film.

### 4. EVALUATION OF LAMINATE FOR DIELECTRIC AND FABRICATION OF DIELECTRIC

Ultra violet ray was exposed to the water development-type photosensitive film of laminate for dielectric on the glass substrate obtained in 3-(2) of EXAMPLE2 by an ultra high pressure mercury lamp at an irradiation quantity of 300 mJ/cm² through a test pattern mask. Subsequently, polyethylene terephthalate of the support film was peeled off.

Subsequently, a spray development was performed by spraying water from nozzle for 30 seconds at a liquid temperature of 30°C at a spray pressure of 3 kg/cm², a non-exposed part was eliminated to form a pattern.

A pattern shape of the resultant pattern were evaluated. Consequently, a remaining minimum line width in formed lines was 60 µm. In PDP, since the accuracy of about hundreds of micrometers is sufficient as the present condition, it can be said that the pattern good enough was obtained.

Next, after pattern forming, the firing treatment where the temperature was raised at a rising speed of 10°C/min and retained at 580°C for 30 min was given. Consequently, the good dielectric pattern was obtained.

### [COMPARATIVE EXAMPLE]

### 1. FABRICATION OF FILM FOR DIELECTRIC

The photosensitive glass paste composition was prepared like the case of 1-(1) of EXAMPLE2, except having not mixed an azo dye as an ultraviolet ray absorbent, but mixed 41 parts of weight of 2,2-dimethoxy-2-phenylacetophenone.

Next, film for dielectric of three-layer structure was fabricated like the 1-(2) using these photosensitive glass paste composition.

### 2. FABRICATION OF WATER DEVELOPMENT-TYPE PHOTOSENSITIVE FILM

A water development-type photosensitive film of three-layer structure was prepared completely like the case of 2-(1), (2) of EXAMPLE2.

### 3. FABRICATION OF LAMINATE FOR DIELECTRIC

A laminate for dielectric was prepared on glass substrate completely like the case of 3-(1), (2) of EXAMPLE2.

### 4. EVALUATION OF LAMINATE FOR DIELECTRIC AND FABRICATION OF DIELECTRIC

Ultra violet ray was exposed to the water development-type photosensitive film of laminate for dielectric on the glass substrate obtained in 3. of COMPARATIVE EXAMPLE by an ultra high pressure mercury lamp at an irradiation quantity of 100 mJ/cm² through a test pattern mask with which a predetermined pattern was formed. Subsequently, polyethylene terephthalate of the support film was peeled off.

Subsequently, a spray development was performed by spraying water from nozzle for 30 seconds at a liquid temperature of 30°C at a spray pressure of 3 kg/cm², a non-exposed part was eliminated to form a predetermined pattern.

A pattern shape of the resultant pattern were evaluated. Consequently, unevenness was found in edge part of pattern. This is considered that azo dye as ultraviolet ray absorbent is not contained in film for dielectric so that when the water development-type photosensitive film is exposed through the mask, ultraviolet ray enters film for dielectric for the first layer and is scattered by internal glass powder, consequently, the film for dielectric cannot be exposed as shape of the mask in high accuracy.

Next, after pattern forming, the firing treatment where the temperature was raised at a rising speed of 1.0°C/min and retained at 580°C for 30 min was given. Understandably, unevenness was found in the firing pattern.

### INDUSTRIAL APPLICABILITY

According to the invention, the laminate for dielectric is at least configured with the first layer and the second layer containing inorganic powder and a binder resin, the second layer forms a laminate for dielectric containing photopolymerizable monomer and a photopolymerization initiator, the composition for dielectric for forming the first layer further contains the light absorbent which absorbs light having the predetermined wavelength. Accordingly, when the second layer is exposed with light having the predetermined wavelength through a mask and the like to form a pattern in a state where the first layer and the second layer are overlaid to make a laminate for dielectric, the light which passes through the second layer and attains to the first layer is absorbed by the light absorbent. This can prevent a light from reentering the second layer from random direction after the light which attains the first layer is scattered by inorganic powder and the like in the first layer, and form the desired pattern according to the shape of mask.

And a pattern is formed into a desired shape in the second layer, subsequently all organic contents is eliminated by firing from the first layer and the second layer and the dielectric is obtained, consequently a concavoconvex desired from the pattern at the second layer is formed on the surface. When fabricating the PDP, for example, it is possible to assure paths to introduce a discharge gas to each cell by fitting a dielectric derived from the second layer to each cell so as to cover each cell, then by fitting as corresponded in concavo parts to a barrier rib, convex parts to each cell respectively.

As described above, by forming a paths introducing a discharge gas in PDP and collectively firing the first layer and the second layer to form the dielectric, it is possible to easily form the gas introduction paths, enhance the working efficiency in the fabrication steps of plasma display panels and shorten the tact time per panel.

## Claims

1. A composition for a dielectric of a plasma display panel laminating two layers comprising:
a first layer containing inorganic powder, a binder resin, and a light absorbent which absorbs light having a predetermined wavelength; and
a second layer containing inorganic powder, a binder resin, a photopolymerizable monomer and a photopolymerization initiator.

2. The composition for the dielectric of the plasma display panel as claimed in claim 1, wherein the light absorbent is 0.01 parts by weight to 30 parts by weight based on total 100 parts by weight of the organic powder, the binder resin and the light absorbent.

3. A laminate for a dielectric of a plasma display panel laminating two layers comprising:
a first layer containing inorganic powder, a binder resin, and a light absorbent which absorbs light having the predetermined wavelength; and
a second layer containing inorganic powder, a binder resin, a photopolymerizable monomer and a photopolymerization initiator.

4. A method for forming a dielectric of a plasma display panel laminating two layers comprising:
providing a first layer containing inorganic powder, a binder resin, and a light absorbent which absorbs light having a predetermined wavelength;
providing a second layer containing inorganic powder, a binder resin, a photopolymerizable monomer and a photopolymerization initiator on this;
then forming a pattern having the predetermined shape by developing after selectively irradiating light to the second layer;
collectively firing the first layer and the second layer.
